# FASCICULE DE BREVET EUROPEEN

(11) **EP 3 368 340 B1**
(45) Date de publication et mention de la délivrance du brevet: **10.07.2019**
(21) Numéro de dépôt: 16770290.1
(22) Date de dépôt: 23.09.2016
(51) Int. Cl.: B60C 11/00, B60C 11/03, B60C 11/13, B60C 11/12

(54) **PNEUMATIQUE AVEC BANDE DE ROULEMENT COMPORTANT DES SECTEURS RENFORCÉS ET UNE SCULPTURE LAMELLISÉE**
REIFEN MIT EINER LAUFFLÄCHE MIT VERSTÄRKTEN SEKTOREN UND EINEM LAMELLENLAUFFLÄCHENMUSTER
TYRE WITH A TREAD HAVING REINFORCED SECTORS AND A SIPED TREAD PATTERN

(30) Priorité: 30.10.2015 FR 1560420
(43) Date de publication de la demande: 05.09.2018
(73) Titulaire: Compagnie Générale des Etablissements Michelin, 63000 Clermont-Ferrand (FR)
(72) Inventeur: PALLOT, Patrick, 63040 Clermont-Ferrand Cedex 9 (FR); DAVAL, Bertrand, 63040 Clermont-Ferrand Cedex 9 (FR)
(74) Mandataire: Bauvir, Jacques
(86) Numéro de dépôt international: PCT/EP2016/072741
(87) Numéro de publication internationale: WO 2017/071891

(56) Documents cités:
- EP-A1- 1 535 760
- EP-A1- 2 708 382
- DE-A1-102009 044 185

## Description

### Domaine de l'invention

La présente invention est relative aux pneumatiques, et plus particulièrement à un pneumatique dont les performances d'adhérence sont améliorées.

De façon générale, un pneumatique est un objet ayant une géométrie de révolution par rapport à un axe de rotation. Un pneumatique comprend deux bourrelets destinés à être montés sur une jante ; il comprend également deux flancs reliés aux bourrelets, un sommet comportant une bande de roulement destinée à entrer en contact avec le sol, le sommet ayant un premier côté relié à l'extrémité radialement extérieure de l'un des deux flancs et ayant un deuxième côté relié à l'extrémité radialement extérieure de l'autre des deux flancs.

La constitution du pneumatique est usuellement décrite par une représentation de ses constituants dans un plan méridien, c'est-à-dire un plan contenant l'axe de rotation du pneumatique. Les directions radiale, axiale et circonférentielle désignent respectivement les directions perpendiculaire à l'axe de rotation du pneumatique, parallèle à l'axe de rotation du pneumatique et perpendiculaire à tout plan méridien. Dans ce qui suit, les expressions « radialement », « axialement » et « circonférentiellement » signifient respectivement « selon une direction radiale », « selon la direction axiale » et « selon une direction circonférentielle » du pneumatique. Les expressions « radialement intérieur, respectivement radialement extérieur » signifient « plus proche, respectivement plus éloigné, de l'axe de rotation du pneumatique, selon une direction radiale ». Le plan médian est un plan perpendiculaire à l'axe de révolution du pneumatique, positionné axialement de façon à couper la surface de la bande de roulement sensiblement à mi-distance des bourrelets. Les expressions « axialement intérieur, respectivement axialement extérieur » signifient « plus proche, respectivement plus éloigné, du plan médian du pneumatique, selon la direction axiale ».

### État de la technique

De manière connue, la bande de roulement d'un pneumatique, qu'il soit destiné à équiper un véhicule de tourisme ou un véhicule poids lourd, est pourvue d'une sculpture comprenant notamment des éléments de sculpture ou blocs élémentaires délimités par diverses rainures principales, circonférentielles, transversales ou encore obliques, les blocs élémentaires pouvant en outre comporter diverses incisions ou lamelles plus fines. Les rainures constituent des canaux destinés à évacuer l'eau lors d'un roulage sur sol mouillé et les parois de ces rainures définissent les bords d'attaque et de fuite des éléments de sculpture, en fonction du sens du virage.

Pour améliorer l'adhérence d'un pneumatique, et plus particulièrement pour l'adhérence sur sol sec et sur sol humide, il est bien connu de diminuer la rigidité ou la dureté du mélange caoutchouteux constituant de la bande de roulement. Cette diminution de rigidité de la bande de roulement permet à celle-ci de mieux épouser la surface rugueuse du sol de roulage et ainsi la surface réelle de contact avec le sol de roulage est augmentée et la performance d'adhérence améliorée par rapport à une bande de roulement dont le mélange caoutchouteux est plus rigide. Cependant, l'utilisation d'un mélange caoutchouteux de bande de roulement moins rigide favorise les déformations des rainures de sculptures, ce qui peut dégrader leur aptitude à évacuer l'eau.

Le document EP 2 708 382 A1 propose un pneumatique selon le préambule de la revendication 1 dont les rainures sont bordées de mélange de caoutchouc plus rigide que le mélange de caoutchouc constituant majoritairement la bande de roulement. Autrement dit, le document EP 2 708 382 A1 propose de rigidifier les bords de blocs de sculptures. Cependant, alors que le mélange de caoutchouc relativement mou est destiné à favoriser l'adhérence, on a constaté que, même si dans une coupe méridienne du pneumatique la proportion de mélange rigide est modeste, ce mélange rigide cause assez vite une dégradation de la mise à plat de la bande de roulement dans l'aire de contact du pneumatique en roulage, d'où une augmentation sensible de la résistance à l'avancement et une dégradation significative de l'adhérence, par réduction du contact entre la gomme et le sol, ce qui ruine l'usage de mélange de caoutchouc intrinsèquement très adhérent.

Le document DE 10 2009 044 185 A propose un pneumatique dont les rainures sont bordées d'incisions. Autrement dit, tout à l'opposé de l'enseignement précédent, le document DE 10 2009 044 185 A propose de rendre moins rigides les bords de sculpture. L'effet recherché est de combattre l'usure irrégulière de la bande de roulement. Cependant, la présence d'incisions dans des blocs de sculpture augmente la mobilité de sculpture, donc la déformation de ces blocs, ce qui dégrade le comportement du pneumatique. Et lorsque l'on veut associer la présence d'incisions à un matériau de faible rigidité pour la bande de roulement, on a constaté que la résistance au roulement se dégrade en plus d'une dégradation du comportement, ce qui semble dû à une augmentation significative de la mobilité de sculpture.

### Description brève de l'invention

L'invention a pour objet un pneumatique comprenant :
- deux bourrelets et deux flancs reliés aux bourrelets ;
- un sommet, le sommet ayant un premier côté relié à l'extrémité radialement extérieure de l'un des deux flancs et ayant un deuxième côté relié à l'extrémité radialement extérieure de l'autre des deux flancs, le sommet comportant une bande de roulement radialement extérieure, la bande de roulement comprenant :
   ∘ au moins un premier secteur s'étendant axialement sur une partie de la largeur totale de la bande de roulement, et s'étendant radialement jusqu'à une face de contact de premier secteur, destinée à venir en contact avec la chaussée pendant le roulage du pneumatique ;
   ∘ au moins un second secteur axialement adjacent audit au moins un premier secteur, ledit au moins un second secteur s'étendant axialement sur une partie de la largeur totale de la bande de roulement, et s'étendant radialement vers une face de contact de second secteur, destinée à venir en contact avec la chaussée pendant le roulage du pneumatique ;
   ∘ une pluralité de rainures circonférentielles aménagées à partir de l'une desdites faces de contact destinées à venir en contact avec la chaussée pendant le roulage du pneumatique, chaque rainure circonférentielle ayant des flancs de rainure circonférentielle et un fond de rainure circonférentielle, chaque rainure circonférentielle ayant une profondeur P mesurée selon une direction radiale entre le fond et ladite face de contact ;
   caractérisé en ce que, sur le second secteur ou sur l'un des seconds secteurs au moins, la bande de roulement comporte une pluralité d'évidements orientés au moins en partie axialement, et s'étendant radialement vers l'intérieur depuis ladite face de contact de second secteur jusqu'à une profondeur p valant au moins 25% de la profondeur P, ladite pluralité d'évidements étant répartie sur toute la circonférence du pneumatique, et en ce que chaque second secteur est constitué d'un mélange caoutchouteux de module dynamique de cisaillement G* au moins deux fois supérieur au module dynamique de cisaillement G* du mélange caoutchouteux de chaque premier secteur.

Ainsi, on parvient à réconcilier l'utilisation d'un mélange de caoutchouc assez mou pour être très adhérent, lequel est disposé dans des premiers secteurs très majoritairement sur la largeur axiale du pneumatique, avec l'implantation dans un ou des seconds secteurs, de mélange rigide ou renforcé. Les inventeurs ont constaté que si la présence de ces seconds secteurs permet en effet d'améliorer la capacité du pneumatique à drainer l'eau et à compenser la poussée latérale du pneumatique en virage, les seconds secteurs continus dans le sens circonférentiel conduisent à une augmentation de la résistance à l'avancement et à une réduction de l'aire de contact inacceptables. Il est donc proposé de disposer avantageusement d'évidements régulièrement disposés au tour de roue dans les seconds secteurs constitués de matériau rigide de renforcement.

Dans la suite de la description, l'invention est illustrée par des exemples où les évidements sont tous des lamelles, sans que ceci ne soit limitatif. Au moins certains évidements peuvent être formés par des lamelles alors que d'autres peuvent être des rainures orientées transversalement. Faisons observer qu'un évidement se distingue d'une lamelle par une plus grande épaisseur ; comme les caractéristiques principales des évidements décrites ci-dessous sont des caractéristiques géométriques des évidements vus en coupe méridienne, que selon l'invention les évidements s'étendent au moins en partie transversalement et que l'épaisseur est alors une caractéristique géométrique vue dans la direction circonférentielle, donc de bien moindre incidence pour ce qui concerne l'invention, sauf indication contraire, toutes les caractéristiques illustrées en liaison avec une lamelle peuvent être appliquées à un évidement. L'évidement (ou la lamelle) peut se caractériser par sa profondeur dans la direction radiale p, sa largeur dans la direction axiale 1 et son épaisseur E. Remarquons aussi que l'homme du métier est fréquemment amené à disposer des lamelles dans une bande de roulement pour des raisons bien connues. La présence d'évidements facilite grandement la flexion du sommet du pneumatique comme il convient pour favoriser la mise à plat de la bande de roulement dans l'aire de contact, sans nuire à l'effet de renforcement apporté par les seconds secteurs, surtout lorsque les évidements sont des lamelles, et plus particulièrement lorsque celles-ci sont orientées parallèlement à l'axe de rotation du pneumatique.

### Description des Figures

Les objets de l'invention sont maintenant décrits à l'aide du dessin annexé dans lequel :
- la figure 1 est une perspective schématique partielle illustrant un mode de réalisation de l'invention ;
- la figure 2 est une coupe méridienne schématique partielle illustrant le mode de réalisation de l'invention de la figure 1 ;
- les figures 3 à 6 présentent en coupe méridienne partielle différents modes de réalisation de l'invention ;
- les figures 7 et 8 représentent en perspective un autre mode de réalisation de l'invention.

### Description détaillée de l'invention

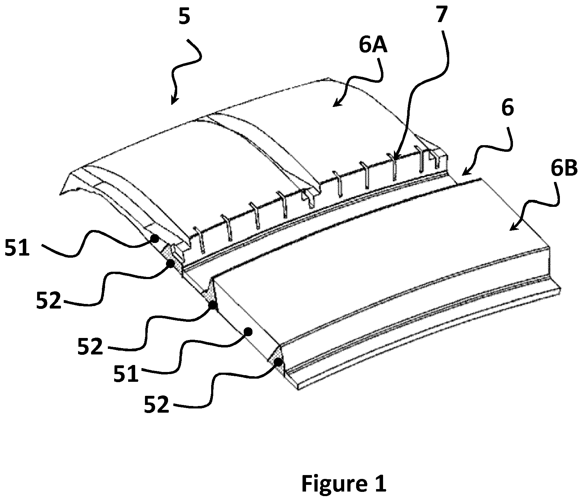

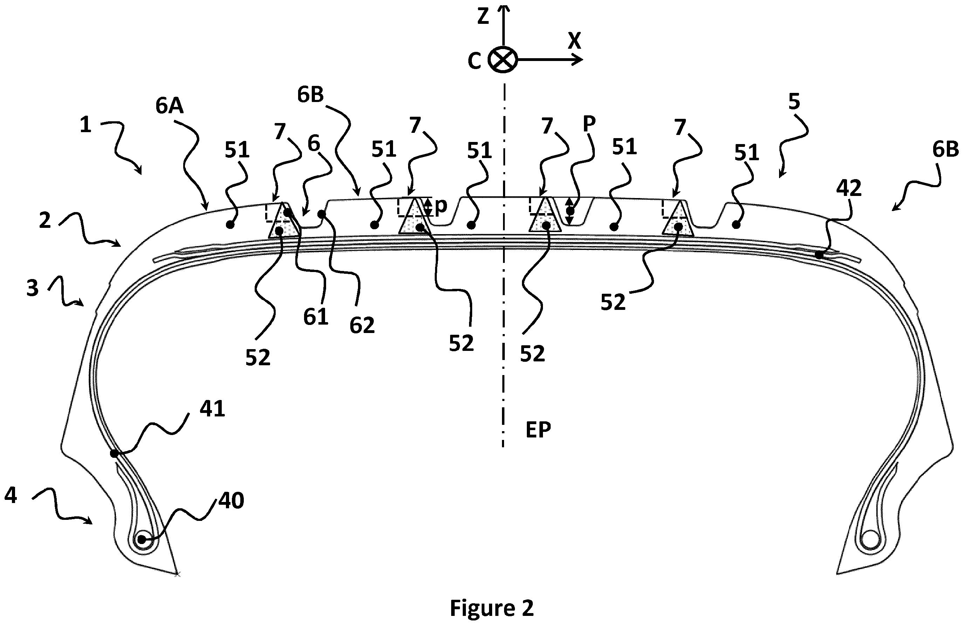

On voit aux figures 1 et 2 un pneumatique 1 comprenant deux flancs 3 reliés chacun à un bourrelet 2. Le pneumatique comporte un sommet 2; le sommet 2 est relié de chaque côté à l'extrémité radialement extérieure de chacun des deux flancs. Le sommet 2 comporte une bande de roulement 5. La bande de roulement 5 est constituée essentiellement par une pluralité de premiers secteurs 51 et une pluralité de seconds secteurs 52. Chaque premier secteur s'étend axialement sur une partie de la largeur totale de la bande de roulement, et s'étendant radialement jusqu'à une face de contact de second secteur, destinée à venir en contact avec la chaussée pendant le roulage du pneumatique. Le cumul, en largeur mesurée axialement, des premiers secteurs s'étend sur la majorité de la largeur axiale de la bande de roulement.

Chaque second secteur 52 s'étend axialement sur une toute petite fraction de la largeur totale de la bande de roulement ; il s'étend radialement jusqu'à une face de contact de second secteur, elle aussi destinée à venir en contact avec la chaussée pendant le roulage du pneumatique. On voit que chaque second secteur est conformé en coin, dont l'extrémité radialement intérieure est proche de la structure de renforcement du pneumatique, et dont la largeur diminue progressivement au fur et à mesure que l'on s'approche de la surface extérieure de la bande de roulement. Chaque second secteur est constitué essentiellement en un matériau rigide de renforcement, nettement plus rigide que le matériau des premiers secteurs apportant des performances élevées en adhérence. Les seconds secteurs 52 peuvent avoir des extrémités radialement intérieures s'appuyant sur la surface extérieure de l'armature. Les seconds secteurs peuvent également être reliés entre eux par une couche continue (la couche est constituée par le même matériau rigide de renforcement) les reliant sur toute ou partie de la largeur axiale de la bande de roulement.

Dans les illustrations de l'invention, on voit que les premiers (51) et seconds secteurs (52) forment ensemble des blocs de sculpture 6A, 6B,... Cet aspect n'est pas limitatif; par exemple, il pourrait y avoir plusieurs premiers secteurs et/ou plusieurs seconds secteurs 52 par élément de sculpture. Deux blocs de sculpture 6A, 6B axialement adjacents sont séparés par une rainure circonférentielle 6. Chaque rainure circonférentielle 6 s'étend au moins en partie circonférentiellement. Chaque rainure circonférentielle 6 est délimitée axialement par des flancs 61 et 62 de rainure circonférentielle. Chaque rainure circonférentielle 6 a une profondeur « P » mesurée selon une direction radiale entre le fond de la rainure circonférentielle et la face de contact de la bande de roulement avec le sol. Chaque second secteur est, vu en coupe méridienne, conformé en coin; lors d'un roulage rapide en virage, chaque second secteur s'oppose, par sa forte raideur en compression et en cisaillement (comparativement aux premiers secteurs), au cisaillement et au basculement des blocs de sculpture ; cela permet ainsi de conserver une surface de contact avec le sol de roulage importante, gage de meilleure adhérence, et cela permet de limiter les surpressions sur le bord d'attaque des rainures circonférentielles et ainsi de limiter les échauffements.

Suivant l'invention, au moins un second secteur, par exemple celui le plus sollicité en cas de forte accélération transversale imposée au pneumatique, comporte un évidement, ici une lamelle 7 de profondeur radiale inférieure à la profondeur de sculpture. Introduisons une règle de lecture des références au dessin : les références débutant par le chiffre 7 se rapportent indistinctement à des lamelles ou à des évidements. Suivant un mode de réalisation avantageux de l'invention, la lamelle 7 ayant une profondeur « p » valant au moins 66% de la profondeur de rainure circonférentielle « P ». On voit à la figure 2 que les lamelles 7 (matérialisant des évidements) sont présentes sur l'ensemble des seconds secteurs 52, et à la figure 1, on voit que la bande de roulement comporte une sculpture formée par des motifs répétitifs circonférentiellement (comme bien connu en soi) et qu'il y a au moins une lamelle par motif de sculpture.

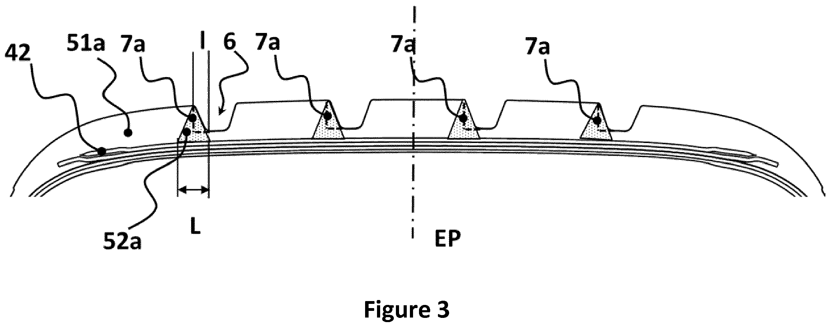

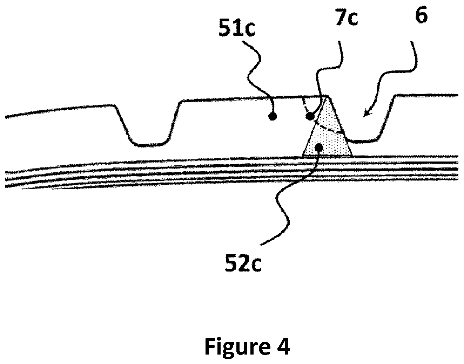

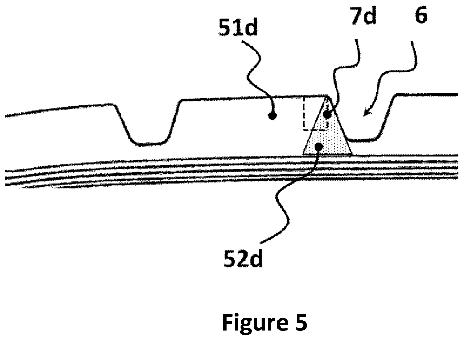

A la figure 3, on voit des lamelles 7a dont la largeur « 1 » au niveau du fond de rainure circonférentielle 6 est inférieure à la largeur « L » des seconds secteurs 52a à leur extrémité radialement intérieure, adjacente à une ceinture 42. A la figure 4, on voit une lamelle 7c pénétrant à la fois dans un second secteur 52c et dans un premier secteur 51c. A la figure 5, on voit une forme de réalisation dans laquelle une lamelle 7d pénètre à la fois dans un second secteur 52d et dans un premier secteur 51d : contrairement à la variante précédente, cette fois la lamelle 7d ne débouche pas dans la rainure circonférentielle 6. Quant au nombre d'évidements dans les seconds secteurs répartis sur l'ensemble de la circonférence de la bande de roulement, il est de préférence supérieur à 40, et de façon avantageuse il est supérieur à 60. Suivant un aspect de réalisation, comme on le voit sur les figures 1 à 4 et 6 à 8, les évidements dans les seconds secteurs sont débouchants dans une rainure circonférentielle adjacente. Ceci n'est qu'une variante de réalisation parmi d'autres, car les évidements dans les seconds secteurs pourraient tout aussi bien être non débouchants dans une rainure circonférentielle adjacente, comme à la figure 5.

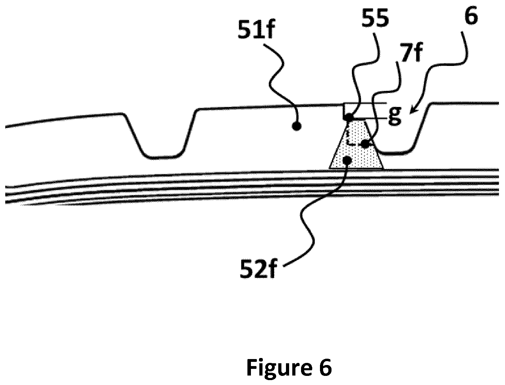

A la figure 6, on voit une bande de roulement dans laquelle les seconds secteurs 52f ne sont pas directement en contact avec la surface extérieure de la bande de roulement car, sur le second secteur ou sur l'un des seconds secteurs au moins, la face de contact de second secteur comporte une gorge 55 ayant une profondeur g inférieure à 2 mm. Rappelons que l'on a précisé que, selon l'invention, chaque second secteur s'étendant radialement vers une face de contact de second secteur, destinée à venir en contact avec la chaussée pendant le roulage du pneumatique ; cela signifie que chaque second secteur peut aller jusqu'à la face de contact de second secteur, destinée à venir en contact avec la chaussée pendant le roulage du pneumatique, comme aux figures précédentes (le contact à l'état neuf étant ponctuel), ou bien que, comme à la figure 6, chaque second secteur peut à l'état neuf du pneumatique, être en retrait radialement du niveau où il serait en contact avec la chaussée pendant le roulage du pneumatique. Suivant cet aspect de l'invention, la gorge, qui forme un ressaut, c'est-à-dire une rainure de profondeur « g » assez faible, permet d'obtenir ce que l'on peut appeler une « nervure sacrifiée ». Cette nervure est sacrifiée au sens où, par conception, elle va glisser à la surface de la route en usage normal, ce qui va entretenir ledit ressaut par une usure permanente du pneumatique à cet endroit. Pour d'autres informations sur la disposition constructive « nervure sacrifiée », le lecteur peut se reporter au brevet US 4,480,671 qui montre une telle nervure sacrifiée [voir nervure latérale 8] proposée dans un tout autre but. L'homme du métier sait que la différence entre le rayon de roulement dans le ou les premiers secteurs et le rayon de roulement au droit de la gorge du ou des seconds secteurs peut s'auto-entretenir au cours de l'usure du pneu en service normal. Dans cette variante de réalisation, on va considérer par convention de langage que les évidements (ici les lamelles 7f) s'étendent aussi radialement vers l'intérieur depuis ladite face de contact de second secteur bien qu'il y ait un ressaut : en effet, comme expliqué ci-dessus, il va apparaitre un contact glissant, en fonctionnement du pneumatique.

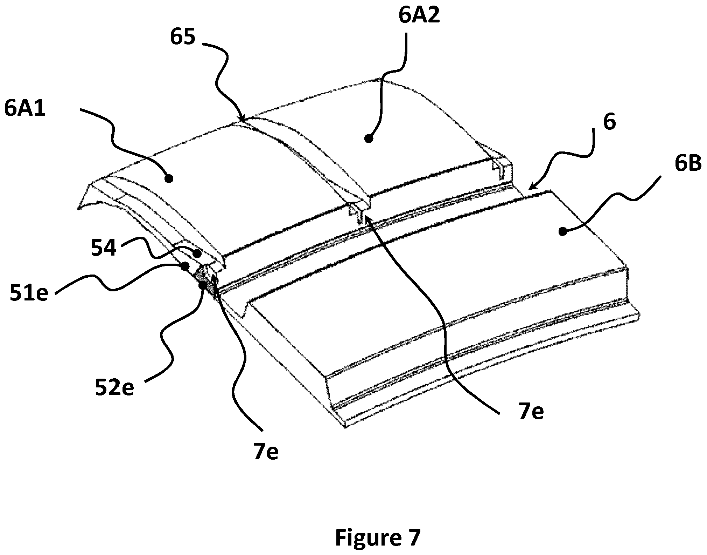

A la figure 7, on voit que les premiers (51e) et seconds (52e) secteurs forment plusieurs blocs de sculpture 6A1, 6A2 circonférentiellement adjacents. Deux blocs de sculpture 6A1, 6A2 circonférentiellement adjacents sont séparés par une rainure axiale 65. A l'endroit où chaque rainure axiale 65 coupe une rainure circonférentielle 6, on voit une zone de pontage 54. On appelle « zone de pontage » une zone où la rainure axiale 65 est de profondeur moindre, formant une liaison mécanique entre deux blocs de sculpture 6A1, 6A2 circonférentiellement adjacents. Dans le mode de réalisation illustré à la figure 7, on voit que lesdits évidements 7e situés sur les seconds secteurs 52e sont localisés dans les zones de pontages 54.

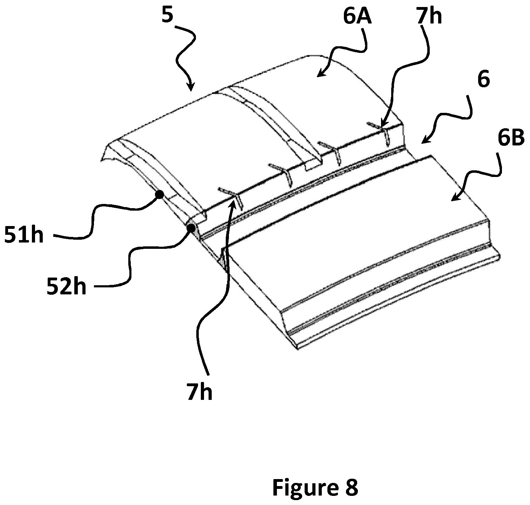

A la figure 8, on voit des premiers secteurs 51h et on voit des évidements dans le second secteur 52h qui sont sensiblement orientés d'un angle de 30° par rapport au plan parallèle à l'axe de rotation. D'une façon plus générale, il peut être avantageux que, selon les caractéristiques plus spécifiques des sculptures -ce qui n'est pas en soi l'objet de la présente invention-, les évidements dans le second secteur 52h soient sensiblement orientés d'un angle compris entre -40° et +40° par rapport au plan parallèle à l'axe de rotation.

Le matériau, constitutif de la bande de roulement 5, est un matériau élastomérique de module dynamique de cisaillement G*, à 60°C et sous une contrainte alternée à 10 Hz de 0,7 MPa, inférieur à 1,1 MPa, et préférentiellement inférieur à 0,9 MPa . On entend par « matériau constitutif de la bande de roulement » le matériau qui comprend au moins 50% du volume compris entre la surface de contact avec le sol à l'état neuf et un niveau correspondant à 1,6 mm au-dessus du fond de rainure circonférentielle 6 (1,6 mm étant la hauteur habituelle des témoins d'usure).

Pour la réalisation d'un matériau élastomérique constitutif de la bande de roulement 5 ayant un module dynamique de cisaillement G* valant 0,9MPa, on peut se reporter par exemple à la formulation ci-dessous :

**Tableau 1 : formulation**

| Composition | Exemple |
|---|---|
| SBR (a) | **100** |
| Silice (b) | **110** |
| Agent de couplage (c) | **9** |
| Plastifiant liquide (d) | **20** |
| Plastifiant résine (e) | **50** |
| Noir | **5** |
| Oxyde de zinc | **3** |
| Acide stéarique | **2** |
| Antioxydant (f) | **2** |
| Accélérateur (g) | **2** |
| DPG | **2** |
| Soufre | **1** |

avec:
(a) SBR avec 27% styrène, butadiène -1,2 :5%, cis-1,4 :15%, trans -1,4: 80% Tg -48°C
(b) Silice « Zeosill 165MP » de la société Solvay de surface BET 160m²/g
(c) Silane TESPT « SI69 » de la société Evonik
(d) Huile TDAE « Flexon 630 » de la société Shell
(e) Résine « Escorez 2173 » de la société Exxon
(f) Antioxydant « Santoflex 6PPD » de la société Solutia
(g) Accélérateur « Santocure CBS » de la société Solutia

**Tableau 2: Propriétés mécaniques de la composition après vulcanisation**

| Composition | Exemple |
|---|---|
| Module à 60°C (MPa) | **0,9** |
| Tg (°C) Tanδ max | **-10** |

D'une façon générale, le second secteur est constitué essentiellement en un matériau rigide ou renforcé. Cela peut être un mélange élastomérique renforcé par des fibres, comme proposé dans le brevet US 2,710,042 B1 ou dans la demande de brevet US2010/0145948 A1 ou dans le brevet EP 0320215 B1. Cela peut être un mélange élastomérique de type rigide. On peut combiner les modes de réalisations cités ci-dessus.

Quant à sa forme du ou des seconds secteurs, elle peut être en coin : c'est l'exemple choisi pour expliciter l'invention. En alternative, le ou les seconds secteurs peuvent prendre la forme d'inserts de largeur axiale sensiblement constante radialement, formant une peau à la surface des rainures circonférentielles, comme proposé dans le brevet EP 1 701 854 B1. Quant à la position dans la bande de roulement, le mélange renforcé peut être disposé en paroi de rainure circonférentielle ou dans l'épaisseur des blocs de sculpture. Les seconds secteurs peuvent également être reliés entre eux par une couche continue (la couche est constituée par le même matériau rigide de renforcement) les reliant sur toute ou partie de la largeur axiale de la bande de roulement.

De préférence, le matériau rigide de renforcement est dix fois plus rigide que le matériau du ou des premiers secteurs de la bande de roulement. De façon avantageuse, le matériau rigide de renforcement est à base d'un matériau élastomérique ayant un module dynamique G* mesuré à 60°C à 10 Hz et sous une contrainte de cisaillement alterné de 0,7 MPa supérieur à 20 MPa. Par exemple, le tableau 3 donne, à titre d'exemple, une formulation qui permet d'obtenir un mélange de rigidité 30 MPa (à 60°C et sous une contrainte alternée à 10 Hz de 0,7 MPa) notamment grâce à l'action combinée d'une résine époxyde et d'un durcisseur aminé :

**Tableau 3**

| Constituant | C.1 |
|---|---|
| NR (1) | 100 |
| Noir de carbone (2) | 70 |
| Résine Formophénolique (3) | 12 |
| ZnO (4) | 3 |
| Acide stéarique (5) | 2 |
| 6PPD (6) | 2,5 |
| HMT (7) | 4 |
| Soufre | 3 |
| CBS (8) | 2 |

| | |
|---|---|
| (1) Caoutchouc Naturel ; (2) Noir de carbone N326 (dénomination selon la norme ASTM D-1765) ; (3) Résine formophénolique novolac (« Peracit 4536K » de la société Perstorp) ; (4) Oxyde de zinc (grade industriel - société Umicore) ; (5) Stéarine (« Pristerene 4931 » de la société Uniqema) ; (6) N-1,3-diméthylbutyl-N-phénylparaphénylènediamine (Santoflex 6-PPD de la société Flexsys) ; (7) Hexaméthylènetétramine (de la société Degussa) ; (8) N-cyclohexyl-benzothiazyl sulphénamide(Santocure CBS de la société Flexsys). | |

### Essais

Le pneumatique de référence T est connu sous la dénomination commerciale Pilot Sport 3 en 225/45 R 17 94 Y gonflé à 2,4 bars. La bande de roulement est réalisée en matériau ayant un module de cisaillement G* à 10Hz sous une contrainte alternée de 0,7 MPa valant 0,9 MPa. La sculpture est à cinq nervures séparées par quatre rainures circonférentielles (taux d'entaillement de 20%), avec des angles de dépouille de 5° sans aucune lamelle ou évidement. La variante V1 est un pneumatique même dimension que le témoin, avec la même architecture mais avec des seconds secteurs en forme de coins en mélange rigide dont la formule est donnée ci-dessus, disposés comme montré à la figure 2, sachant qu'il n'y a toujours pas de lamelle ou d'évidement. La variante V2 est conforme à la figure 2, avec 60 lamelles de de profondeur P.

La mesure d'empreinte au sol est réalisée sous une charge appliquée de 483 daN avec une pression de 2,4 bars. Le pneu est couvert d'encre et est mise en charge sur une feuille de papier. L'empreinte obtenue encrée permet de donner une idée de la taille de l'aire de contact.

La mesure de résistance au roulement est réalisée sur un volant de 6 m avec une surface adhérisée. Le pneumatique est gonflé à 2.1 bars sous une charge de 483 daN et la mesure d'effort résistif au centre roue est mesurée à 80km/h.

| | Empreinte encrée (cm2) | Différence de résistance au Roulement (kg/T) vs T |
|---|---|---|
| Témoin T | 140 | 0 kg/T |
| Variante V1 | 132 | +0,7 kg/T |
| Variante V2 | 138 | +0,3 kg/T |

La variante V2 permet de gagner 0,4 kg/T par rapport à la variante V1 et de limiter la perte d'aire de contact, avec la même efficacité en rigidification de la bande de roulement.

## Revendications

1. Pneumatique (1) ayant un axe de rotation et comprenant :
- deux bourrelets (2) et deux flancs (3) reliés aux bourrelets ;
- un sommet (4), le sommet ayant un premier côté relié à l'extrémité radialement extérieure de l'un des deux flancs et ayant un deuxième côté relié à l'extrémité radialement extérieure de l'autre des deux flancs, le sommet comportant une bande de roulement (5) radialement extérieure, la bande de roulement comprenant :
∘ au moins un premier secteur (51) s'étendant axialement sur une partie de la largeur totale de la bande de roulement, s'étendant circonférentiellement sur toute la circonférence du pneumatique, et s'étendant radialement jusqu'à une face de contact de premier secteur destinée à venir en contact avec la chaussée pendant le roulage du pneumatique ;
∘ au moins un second secteur (52) axialement adjacent audit au moins un premier secteur (51), ledit au moins un second secteur (52) s'étendant axialement sur une partie de la largeur totale de la bande de roulement, s'étendant circonférentiellement sur toute la circonférence du pneumatique, et s'étendant radialement vers une face de contact de second secteur destinée à venir en contact avec la chaussée pendant le roulage du pneumatique ;
∘ une pluralité de rainures circonférentielles (6) aménagées à partir de l'une desdites faces de contact destinées à venir en contact avec la chaussée pendant le roulage du pneumatique, chaque rainure circonférentielle ayant des flancs de rainure circonférentielle et un fond de rainure circonférentielle, chaque rainure circonférentielle ayant une profondeur P mesurée selon une direction radiale entre le fond et ladite face de contact ;
**caractérisé en ce que,** sur le second secteur ou sur l'un des seconds secteurs au moins, la bande de roulement comporte une pluralité d'évidements orientés au moins en partie axialement, et s'étendant radialement vers l'intérieur depuis ladite face de contact de second secteur jusqu'à une profondeur p valant au moins 25% de la profondeur P, ladite pluralité d'évidements étant répartie sur toute la circonférence du pneumatique, **et en ce que** chaque second secteur (52) est constitué d'un mélange caoutchouteux de module dynamique de cisaillement G* au moins deux fois supérieur au module dynamique de cisaillement G* du mélange caoutchouteux de chaque premier secteur (51), ledit module étant mesuré à 60°C et sous une contrainte alternée à 10Hz de 0,7MPa.

2. Pneumatique selon la revendication 1, dans lequel l'ensemble des seconds secteurs comporte de tels évidements.

3. Pneumatique selon la revendication 1 ou 2, dans lequel les évidements dans les seconds secteurs s'étendent radialement jusqu'à une profondeur p valant au moins 66% de la profondeur P des rainures circonférentielles sur au moins une partie de la largeur axiale desdits évidements.

4. Pneumatique selon l'une des revendications 1 à 3, dans lequel la bande de roulement comporte une sculpture formée par des motifs répétitifs circonférentiellement, comportant au moins un évidement par motif de sculpture ménagé dans les seconds secteurs.

5. Pneumatique selon l'une des revendications 1 à 4, dans lequel au moins certains évidements sont constitués par des lamelles (7).

6. Pneumatique selon l'une des revendications 1 à 5, dans lequel le nombre d'évidements dans les seconds secteurs répartis sur l'ensemble de la circonférence de la bande de roulement est supérieur à 40.

7. Pneumatique selon l'une des revendications 1 à 6, dans lequel les évidements dans les seconds secteurs sont débouchants dans une rainure circonférentielle adjacente.

8. Pneumatique selon l'une des revendications 1 à 6, dans lequel les évidements dans les seconds secteurs sont non débouchants dans une rainure circonférentielle adjacente.

9. Pneumatique selon l'une des revendications 1 à 8, dans lequel les premiers (51) et seconds (52) secteurs de la bande de roulement forment plusieurs blocs de sculpture (6A1, 6A2) circonférentiellement adjacents, séparés par une rainure axiale (65), chaque rainure axiale comprenant une zone de pontage (54), chaque zone de pontage comportant lesdits évidements (7e).

10. Pneumatique selon l'une des revendications 1 à 9, dans lequel, sur le second secteur ou sur l'un des seconds secteurs au moins, la face de contact de second secteur comporte une gorge (55) ayant une profondeur « g » inférieure à 2 mm.

11. Pneumatique selon l'une des revendications 1 à 10, dans lequel les évidements dans le second secteur sont sensiblement orientés entre -40° et +40° par rapport au plan parallèle à l'axe de rotation.

12. Pneumatique selon l'une des revendications 1 à 11, dans lequel le matériau rigide de renforcement est dix fois plus rigide que le matériau du ou des premiers secteurs de la bande de roulement.

13. Pneumatique selon l'une des revendications 1 à 11, dans lequel le matériau du ou des premiers secteurs (51) est à base d'un matériau élastomérique ayant un module dynamique de cisaillement G*, à 60°C et sous une contrainte alternée à 10 Hz de 0,7 MPa, inférieur à 0,9 MPa.

14. Pneumatique selon l'une des revendications 1 à 11, dans lequel le matériau rigide de renforcement est à base d'un matériau élastomérique ayant un module dynamique G* mesuré à 60°C à 10 Hz et sous une contrainte de cisaillement alterné de 0,7 MPa supérieur à 20 MPa.

## Patentansprüche

1. Luftreifen (1), der eine Drehachse hat und enthält:
- zwei Wülste (2) und zwei mit den Wülsten verbundene Flanken (3);
- einen Scheitel (4), wobei eine erste Seite des Scheitels mit dem radial äußeren Ende einer der zwei Flanken und eine zweite Seite mit dem radial äußeren Ende der anderen der zwei Flanken verbunden ist, wobei der Scheitel einen radial äußeren Laufstreifen (5) aufweist, wobei der Laufstreifen enthält:
∘ mindestens einen ersten Sektor (51), der sich axial über einen Teil der Gesamtbreite des Laufstreifens erstreckt, sich in Umfangsrichtung über den ganzen Umfang des Luftreifens erstreckt, und sich radial bis zu einer ersten Sektor-Kontaktseite erstreckt, die dazu bestimmt ist, während des Rollens des Luftreifens mit der Straße in Kontakt zu kommen;
∘ mindestens einen dem mindestens einen ersten Sektor (51) axial benachbarten zweiten Sektor (52), wobei der mindestens eine zweite Sektor (52) sich axial über einen Teil der Gesamtbreite des Laufstreifens erstreckt, sich in Umfangsrichtung über den ganzen Umfang des Luftreifens erstreckt, und sich radial zu einer zweiten Sektor-Kontaktseite erstreckt, die dazu bestimmt ist, während des Rollens des Luftreifens mit der Straße in Kontakt zu kommen;
∘ eine Vielzahl von ausgehend von einer der Kontaktseiten, die dazu bestimmt sind, während des Rollens des Luftreifens mit der Straße in Kontakt zu kommen, eingerichteten Umfangsrillen (6), wobei jede Umfangsrille Umfangsrillenflanken und einen Umfangsrillenboden hat, wobei jede Umfangsrille eine Tiefe P gemessen gemäß einer radialen Richtung zwischen dem Boden und der Kontaktseite hat;
**dadurch gekennzeichnet, dass** im zweiten Sektor oder mindestens einem der zweiten Sektoren der Laufstreifen eine Vielzahl von Aussparungen aufweist, die zumindest zum Teil axial ausgerichtet sind und sich radial nach innen ausgehend von der zweiten Sektor-Kontaktseite bis zu einer Tiefe p erstrecken, die mindestens 25% der Tiefe P beträgt, wobei die Vielzahl von Aussparungen auf dem ganzen Umfang des Luftreifens verteilt ist, und dass jeder zweite Sektor (52) aus einer Kautschukmischung mit einem dynamischen Schermodul G* mindestens doppelt so hoch wie der dynamische Schermodul G* der Kautschukmischung jedes ersten Sektors (51) besteht, wobei der Modul bei 60°C und unter einer abwechselnden Beanspruchung bei 10 Hz von 0,7 MPa gemessen wird.

2. Luftreifen nach Anspruch 1, wobei die Gesamtheit der zweiten Sektoren solche Aussparungen aufweist.

3. Luftreifen nach Anspruch 1 oder 2, wobei die Aussparungen in den zweiten Sektoren sich radial bis zu einer Tiefe p erstrecken, die mindestens 66% der Tiefe P der Umfangsrillen über mindestens einen Teil der axialen Breite der Aussparungen beträgt.

4. Luftreifen nach einem der Ansprüche 1 bis 3, wobei der Laufstreifen ein von in Umfangsrichtung wiederholten Mustern gebildetes Profil aufweist, das mindestens eine Aussparung pro Profilmuster aufweist, die in den zweiten Sektoren ausgespart ist.

5. Luftreifen nach einem der Ansprüche 1 bis 4, wobei mindestens bestimmte Aussparungen aus Lamellen (7) bestehen.

6. Luftreifen nach einem der Ansprüche 1 bis 5, wobei die Anzahl von Aussparungen in den zweiten Sektoren, die über die Gesamtheit des Umfangs des Laufstreifens verteilt sind, größer ist als 40.

7. Luftreifen nach einem der Ansprüche 1 bis 6, wobei die Aussparungen in den zweiten Sektoren sich in einer benachbarten Umfangsrille öffnen.

8. Luftreifen nach einem der Ansprüche 1 bis 6, wobei die Aussparungen in den zweiten Sektoren sich nicht in einer benachbarten Umfangsrille öffnen.

9. Luftreifen nach einem der Ansprüche 1 bis 8, wobei die ersten (51) und zweiten (52) Sektoren des Laufstreifens mehrere in Umfangsrichtung benachbarte Profilblöcke (6A1, 6A2) formen, die durch eine axiale Rille (65) getrennt sind, wobei jede axiale Rille einen Überbrückungsbereich (54) enthält, wobei jeder Überbrückungsbereich die Aussparungen (7e) aufweist.

10. Luftreifen nach einem der Ansprüche 1 bis 9, wobei, im zweiten Sektor oder mindestens in einem der zweiten Sektoren, die zweite Sektor-Kontaktseite eine Kehle (55) aufweist, die eine Tiefe "g" kleiner als 2 mm hat.

11. Luftreifen nach einem der Ansprüche 1 bis 10, wobei die Aussparungen im zweiten Sektor im Wesentlichen zwischen -40° und +40° bezüglich der Ebene parallel zur Drehachse ausgerichtet sind.

12. Luftreifen nach einem der Ansprüche 1 bis 11, wobei das steife Verstärkungsmaterial zehn Mal steifer ist als das Material des oder der ersten Sektoren des Laufstreifens.

13. Luftreifen nach einem der Ansprüche 1 bis 11, wobei das Material des oder der ersten Sektoren (51) auf der Basis eines Elastomermaterials ist, das einen elastischen Schermodul G* bei 60°C und unter einer abwechselnden Beanspruchung bei 10 Hz von 0,7 MPa niedriger als 0,9 MPa hat.

14. Luftreifen nach einem der Ansprüche 1 bis 11, wobei das steife Verstärkungsmaterial auf der Basis eines Elastomermaterials ist, das einen elastischen Schermodul G* gemessen bei 60°C bei 10 Hz und unter einer abwechselnden Scherbeanspruchung von 0,7 MPa höher als 20 MPa hat.

## Claims

1. Tyre (1) having an axis of rotation and comprising:
- two beads (2) and two sidewalls (3) connected to the beads;
- a crown (4), the crown having a first side connected to the radially outer end of one of the two sidewalls and having a second side connected to the radially outer end of the other of the two sidewalls, the crown comprising a radially outer tread (5), the tread comprising:
∘ at least one first sector (51) extending axially over a portion of the total width of the tread, extending circumferentially over the entire circumference of the tyre, and extending radially as far as a first sector contact face intended to come into contact with the roadway when the tyre is running;
∘ at least one second sector (52) axially adjacent to the said at least one first sector (51), the said at least one second sector (52) extending axially over a portion of the total width of the tread, extending circumferentially over the entire circumference of the tyre, and extending radially towards a second sector contact face intended to come into contact with the roadway when the tyre is running;
∘ a plurality of circumferential grooves (6) formed starting from one of the said contact faces intended to come into contact with the roadway when the tyre is running, each circumferential groove having circumferential groove sidewalls and a circumferential groove bottom, each circumferential groove having a depth P measured in a radial direction between the bottom and the said contact face;
**characterized in that,** on the second sector or on one of the second sectors at least, the tread comprises a plurality of cavities oriented at least partly axially, and extending radially inwards from the said second sector contact face as far as a depth p equivalent to at least 25% of the depth P, the said plurality of cavities being distributed over the entire circumference of the tyre, **and in that** each second sector (52) is made of a rubber compound of dynamic shear modulus G* at least a factor of two higher than the dynamic shear modulus G* of the rubber compound of each first sector (51), said modulus being measured at 60°C at 10 Hz and under an alternating shear stress of 0.7 MPa.

2. Tyre according to Claim 1, in which all of the second sectors comprise such cavities.

3. Tyre according to Claim 1 or 2, in which the cavities in the second sectors extend radially as far as a depth p equivalent to at least 66% of the depth P of the circumferential grooves over at least part of the axial width of the said cavities.

4. Tyre according to one of Claims 1 to 3, in which the tread comprises a tread pattern made up of circumferentially repeating units comprising at least one cavity per tread pattern unit formed in the second sectors.

5. Tyre according to one of Claims 1 to 4, in which at least certain cavities are made up of sipes (7).

6. Tyre according to one of Claims 1 to 5, in which the number of cavities in the second sectors distributed over the entire circumference of the tread is higher than 40.

7. Tyre according to one of Claims 1 to 6, in which the cavities in the second sectors open into an adjacent circumferential groove.

8. Tyre according to one of Claims 1 to 6, in which the cavities in the second sectors do not open into an adjacent circumferential groove.

9. Tyre according to one of Claims 1 to 8, in which the first (51) and second (52) sectors of the tread form several circumferentially adjacent tread pattern blocks (6A1, 6A2) separated by an axial groove (65), each axial groove comprising a bridging zone (54), each bridging zone comprising the said cavities (7e).

10. Tyre according to one of Claims 1 to 9, in which, on the second sector or on one of the second sectors at least, the second sector contact face comprises a recess (55) having a depth "g" of less than 2 mm.

11. Tyre according to one of Claims 1 to 10, in which the cavities in the second sector are substantially oriented at between -40° and +40° with respect to the plane parallel to the axis of rotation.

12. Tyre according to one of Claims 1 to 11, in which the stiff reinforcing material is ten times stiffer than the material of the first sector(s) of the tread.

13. Tyre according to one of Claims 1 to 11, in which the material of the first sector(s) (51) is based on an elastomeric material with a dynamic shear modulus G*, at 60°C and under a 10 Hz alternating stress of 0.7 MPa, of less than 0.9 MPa.

14. Tyre according to one of Claims 1 to 11, in which the stiff reinforcing material is based on an elastomeric material having a dynamic modulus G*, measured at 60°C at 10 Hz and under an alternating shear stress of 0.7 MPa, of greater than 20 MPa.
